## Europäisches Patentamt
## European Patent Office
## Office européen des brevets

(19)

(11) Veröffentlichungsnummer: **0 014 374**
A1

(12) **EUROPÄISCHE PATENTANMELDUNG**

(21) Anmeldenummer: 80100316.1

(22) Anmeldetag: 22.01.80

(51) Int. Cl.³: **G 01 N 31/16**

(30) Priorität: 12.02.79 DE 2905287

(43) Veröffentlichungstag der Anmeldung:
20.08.80 Patentblatt 80/17

(84) Benannte Vertragsstaaten:
AT BE CH FR GB NL SE

(71) Anmelder: SIEMENS AKTIENGESELLSCHAFT Berlin
und München
Postfach 22 02 61
D-8000 München 22(DE)

(72) Erfinder: Vandenbossche, Chris, Dipl.- chem.
Gebuurtestraat 8
B-9710 Zwijnaarde(BE)

(72) Erfinder: Vanhumbeeck, Jacky, Dr.
Abdijbekestraat 73
B-8200 Brugge 2(BE)

(54) Verfahren zur automatischen elektrochemischen Endpunktbestimmung einer Titration.

(57) Verfahren bei dem das Titriermittel einer Badprobe in konstanten Volumeinheiten ($\Delta V_R$) zugegeben wird, nach jeder Titriermittelzugabe ein Meßwert gebildet wird und nach jeder Meßwertbildung die Differenz (Potentialschritt) mit dem vorhergehenden Wert gebildet wird und zur Errechnung des Endpunktes ($V_E$) die drei unmittelbar hintereinander folgenden größten Potentialschritte ($\Delta 0$, $\Delta 1$, $\Delta 2$) herangezogen sind. Gemäß der Erfindung erfolgt die Zufuhr des Titriermittels bis zu einem vorgegebenen pH-Wert (K) kontinuierlich und danach schrittweise, wobei nach jeder einzelnen Titriermittelzugabe ($\Delta V_R$) zur Stabilisierung eine konstante Ruhezeit eingelegt wird, bevor das Meßsignal erfaßt wird.

FIG 2

EP 0 014 374 A1

SIEMENS AKTIENGESELLSCHAFT          Unser Zeichen
Berlin und München                  VPA 79 P 7 9 0 2

Verfahren zur automatischen elektrochemischen Endpunktsbestimmung einer Titration

Die Erfindung bezieht sich auf ein Verfahren zur automatischen elektrochemischen Endpunktsbestimmung einer
Titration, bei dem das Titriermittel einer Probe in
konstanten Volumeinheiten zugegeben wird, nach jeder
Titriermittelzugabe ein Meßwert gebildet wird, nach jeder
Meßwertbildung die Differenz (Potentialschritte) mit dem
vorhergehenden Wert gebildet wird und zur Errechnung des
Endpunktes $V_E$ die drei unmittelbar hintereinander folgenden größten Potentialschritte herangezogen sind, wobei
dann die Titration unterbrochen wird, wenn der höchste
Wert zwischen den beiden anderen Werten liegt.

Verfahren dieser Art sind in der Zeitschrift "Chemie-
Ing.-Technik" 46. Jahrg. 1974, Heft 19, S. 811-817 näher
beschrieben. Diese Literaturstelle befaßt sich mit der
Automatisierung potentiometrischer Titrationen, wobei
ausgeführt wird, daß sich bei der Auswertung solcher

Hs 1 Kow / 6.2.1979

-2-  79 P 7902

automatisierter Titrationen erhebliche Probleme ergeben, so daß nur in wenigen Fällen eine automatische Titration auf einen potentialmäßig vorgegebenen Endwert möglich ist. Es wird deshalb vorgeschlagen, für die Berechnung des Titrationsendpunktes an sich bekannte Näherungsverfahren zu verwenden, welche den Einsatz von einfachen programmierbaren Rechnern gestatten. Die bekannten Näherungsverfahren gehen hierbei von den Voraussetzungen aus, daß der Äquivalenzpunkt und der Wendepunkt der Titrationskurve zusammenfallen. Da jedoch die Titrationskurve zu diesem Punkt in der Regel nicht symmetrisch ist, bildet man die Quotienten der drei größten Potentialschritte unter der Voraussetzung äquidistanter Titriermittelzugaben. Entsprechende Formeln zur näherungsweisen Berechnung des Endpunktes automatisierter potentiometrischer Titrationen sind in Tabelle 1 auf Seite 813 des genannten Aufsatzes angegeben. Auch das erfindungsgemäße Verfahren macht von einem solchen bekannten Näherungsverfahren Gebrauch. Danach wird der Titrationsendpunkt $V_E$ wie folgt berechnet:

$$V_E = V_{max} + \Delta V_R - \int \Delta V_R \text{ wenn } \Delta 1 \text{ nach } \Delta 0 \text{ liegt und}$$
$$V_E = V_{max} + \int \Delta V_R, \text{ wenn } \Delta 1 \text{ vor } \Delta 0 \text{ liegt, wobei } \int, R_1$$
und $R_2$ Hilfsgrößen sind, die sich wie folgt bestimmen:
$$\int = 0{,}5\ R_2 - 0{,}2\ R^2{}_1; \quad R_1 = \Delta 1/\Delta 0 \text{ und } R_2\ \Delta 2/\Delta 1,$$
wobei $V_{max}$ das Gesamtvolumen des Titriermittels vor dem größten Potentialschritt $\Delta 0$ und
$\Delta 0$, $\Delta 1$ und $\Delta 2$ die nach fallender Größe geordneten Potentialschritte bedeuten.

Bereits in dem genannten Aufsatz wird darauf hingewiesen, daß der Nachteil aller dieser bekannten Näherungsverfahren darin besteht, daß lediglich drei Meßpunkte in der Nähe des Äquivalenzpunktes für die Auswertung herangezogen werden und daß gerade diese Meßpunkte naturgemäß mit Fehlern behaftet sind, die durch die Kinetik der Potential-

-3-  79 P 7 9 0 2

einstellung der Elektrode, der Kinetik der Änderung des Diffusionspotentials oder der Kinetik der Gleichgewichtseinstellung der chemischen Reaktion der Titration bedingt sind.

Diese Fehler können zwar in gewissen Grenzen dadurch klein gehalten werden, daß die Titriermittelzugabe sehr langsam erfolgt, was jedoch wiederum sehr lange Titrierzeiten erfordert.

Ein anderes wesentliches Problem, das der Einführung der automatisierten Titrationen nach den genannten Näherungsverfahren entgegensteht, besteht darin, daß die Titrationskurve mehr als einen Wendepunkt enthalten kann, die automatische Steuerung jedoch nicht weiß, welcher Endpunkt tatsächlich der erwünschte ist.

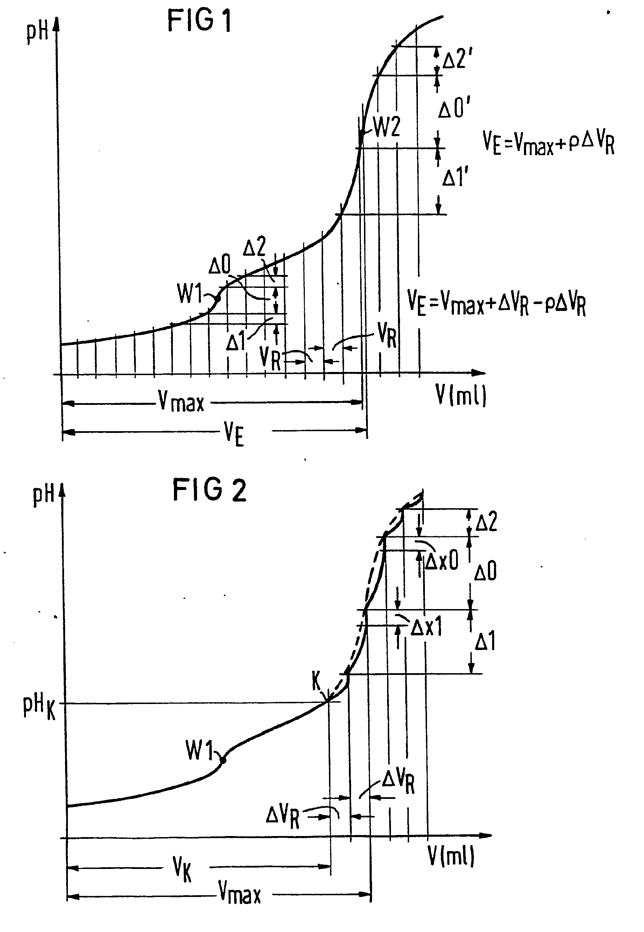

Dies wird anhand der Figur 1 näher erläutert, die eine typische Titrationskurve einer Lauge in einem galvanischen Bad mit einer Säure zeigt, welche einen zweiten Wendepunkt im unteren Bereich aufweist. Hierbei sind in der Abszissenachse die Titriermittelzugaben in Einheiten von ml und in der Ordinatenachse die entsprechenden elektrischen Meßsignale aufgetragen. Diese Meßsignale können proportional dem pH-Wert sein. Der erste Wendepunkt ist mit W1 und der zweite Punkt mit W2 bezeichnet. Wie aus der Zeichnung zu ersehen ist, tritt bereits bei dem ersten Wendepunkt W1 ein maximaler Potentialschritt $\Delta 0$ auf, dem ein kleinerer Potentialschritt $\Delta 2$ nachfolgt bzw. ein kleinerer Potentialschritt $\Delta 1$ vorausgegangen ist. Dieser erste Äquivalenzpunkt entsteht durch die Reaktion einer zusätzlichen Badkomponente mit dem Titriermittel, der jedoch für die gewünschte Titration von untergeordneter Bedeutung ist. Erwünscht ist jedoch die Erfassung des zweiten Äquivalenzpunktes W2, der charakteristisch ist für die Titration der Lauge.

Der Erfindung liegt die Aufgabe zugrunde, ein Verfahren der eingangs beschriebenen Art derart weiterzubilden, daß der Titrationsendpunkt nicht nur genau und in kürzerer Zeit bestimmbar ist, sondern auch für Titrationskurven mit mehreren Stufen geeignet ist. Das erfindungsgemäße Verfahren ist dadurch gekennzeichnet, daß die Zufuhr des Titriermittels mit Hilfe einer Motorkolbenbürette bis zu einem vorgegebenen Wert kontinuierlich erfolgt, daß nach Erreichen dieses vorgegebenen Wertes das Titriermittel in konstanten Volumeneinheiten durch entsprechende schrittweise Steuerung des Bürettenmotors zugegen wird und daß nach jeder einzelnen Titriermittelzugabe zur Stabilisierung eine konstante Ruhezeit eingelegt wird, bevor das Meßsignal erfaßt wird.

Dadurch, daß zu Beginn der Titration die Titriermittelzugabe bis zu einem vorgegebenen Wert kontinuierlich erfolgt, kann nicht nur die Zeit für die Titration erheblich verkürzt werden, sondern es können dadurch nicht erwünschte Titrationsstufen vollkommen eliminiert werden.

Durch die Einschaltung einer Ruhezeit vor Erfassung des Meßsignals tritt nach jeder Titriermittelzugabe eine Stabilisierung des Meßwertes ein, wodurch die Meßreproduzierbarkeit ganz erheblich gesteigert wird.

Bei Verwendung einer pH-Wertmessung zur Errechnung des Titrationsendpunktes kann der vorgegebene Wert für die kontinuierliche Titration ein pH-Wert sein. Eine besonders einfache Wertvorgabe kann dadurch erfolgen, daß ein bestimmter Volumenwert vorgegeben wird. Dies kann in einfacher Weise durch eine entsprechende Wegvorgabe der Motorkolbenbürette erfolgen.

Anhand der Figur 2 wird das erfindungsgemäße Verfahren

näher erläutert. Um die erste Stufe mit dem Wendepunkt W1 auszuschalten, wird der Steuerung entweder ein $pH_K$-Wert vorgegeben, der mit Sicherheit verhindert, daß von der Steuerung der Wendepunkt W1 mit erfaßt wird. In gleicher Weise kann der Steuerung auch ein Volumenwert $V_K$ vorgegeben werden. Bis zu diesem Wert K wird mit relativ hoher Geschwindigkeit das Titriermittel zugegeben, wobei der Bürettenmotor kontinuierlich dreht. Ab dem Punkt K werden dann dem Motor entsprechend viele Steuertakte zugeführt, die den Volumeneinheiten $\Delta V_R$ entsprechen. Wie aus Figur 2 zu entnehmen ist, hat die Titrationskurve ab dem Wert K einen eckigen Verlauf, der dadurch zustandekommt, daß nach Ende der Titriermittelzugabe das Ausgangssignal noch um einen Betrag $\Delta x$ ansteigt. Durch die Einlegung einer Ruhezeit am Ende jeder Titriermittelzugabe tritt eine Stabilisierung der Messung ein. Dadurch wird die Genauigkeit und Reproduzierbarkeit ganz erheblich erhöht.

Beispielsweise wird bei der potentiometrischen Titration einer Natronlauge in einem chemischen Kupferbad mit Hilfe einer verdünnten Salzsäure als Titriermittel der vorgegebene pH-Wert gleich 9 gewählt. Für die Titriermittelzugabe wird zweckmäßigerweise eine Volumeneinheit von 0,2 ml und eine konstante bzw. eine der Größe des Potentialschrittes proportionale Ruhezeit von 5 bis 30 sec gewählt.

5 Patentansprüche
2 Figuren

<u>Patentansprüche</u>                    79 P 7 9 0 2

1. Verfahren zur automatischen elektrochemischen Endpunktsbestimmung einer Titration, bei dem das Titriermittel einer Badprobe in konstanten Volumeneinheiten zugegeben wird, nach jeder Titriermittelzugabe ein Meßwert gebildet wird, nach jeder Meßwertbildung die Differenz (Potentialschritt) mit dem vorhergehenden Wert gebildet wird und zur Errechnung des Endpunktes $V_E$ die drei unmittelbar hintereinander folgenden größten Potentialschritte herangezogen sind, wobei dann die Titration unterbrochen wird, wenn der höchste Wert zwischen den beiden anderen Werten liegt, dadurch  g e - k e n n z e i c h n e t , daß die Zufuhr des Titriermittels mit Hilfe einer Motorkolbenbürette bis zu einem vorgegebenen Wert kontinuierlich erfolgt, daß nach Erreichen dieses vorgegebenen Wertes ($pH_K$, $V_K$) das Titriermittel in konstanten Volumeneinheiten ($\Delta V_R$) durch entsprechende schrittweise Steuerung des Bürettenmotors zugegeben wird und daß nach jeder einzelnen Titriermittelzugabe ($\Delta V_R$) zur Stabilisierung eine konstante bzw. eine der Größe des Potentialschrittes proportionale Ruhezeit eingelegt wird, bevor das Meßsignal erfaßt wird.

2. Verfahren nach Anspruch 1, dadurch  g e k e n n - z e i c h n e t  , daß bei Verwendung einer pH-Wertmessung zur Errechnung des Titrationsendpunktes ($V_E$) der vorgegebene Wert ($pH_K$) für die kontinuierliche Titration ein pH-Wert ist.

3. Verfahren nach Anspruch 1 oder 2, dadurch  g e k e n n - z e i c h n e t , daß der vorgegebene Wert für die kontinuierliche Titration ein Volumenwert ($V_K$) ist.

4. Verfahren nach einem der Ansprüche 1 bis 3, dadurch

-2- 79 P 7 9 0 2

g e k e n n z e i c h n e t , daß die einzelnen Potentialschritte potentiometrisch erfaßt sind.

5. Verfahren nach einem der Ansprüche 1 bis 4, dadurch
g e k e n n z e i c h n e t , daß der Titrationsendpunkt
$V_E$ automatisch nach den an sich bekannten Formeln berechnet wird:

$V_E = V_{max} + \Delta V_R - \rho \Delta V_R$, wenn $\Delta 1$ nahe $\Delta 0$ liegt,

$V_E = V_{max} + \rho \Delta V_R$, wenn $\Delta 1$ vor $\Delta 0$ liegt, wobei $\rho$ ,
$R_1$ und $R_2$ Hilfsgrößen sind, die sich wie folgt bestimmen:

$\rho = 0,5 R_2 - R^2{}_1$; $R_1 = \Delta 1/\Delta 0$ und $R_2 = \Delta 2/\Delta 1$ sind,

wobei $V_{max}$ das Gesamtvolumen vor dem größten Potentialschritt $\Delta 0$ und $\Delta 0$, $\Delta 1$ und $\Delta 2$ die nach fallender Größe
geordneten Potentialschritte bedeuten.

0014374

FIG 1

$V_E = V_{max} + \rho \Delta V_R$

$V_E = V_{max} + \Delta V_R - \rho \Delta V_R$

FIG 2

Europäisches
Patentamt

**EUROPÄISCHER RECHERCHENBERICHT**

0014374

Nummer der Anmeldung

EP 80 10 0316

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | FR - A - 2 293 712 (TACUSSEL JACQUES)  * Seite 9, Zeilen 31-36 *  -- | 1 | G 01 N 31/16 |
| DA | CHEMIE ING.TECHN. Jahrgang 46, 1974, Nr. 19, Weinheim, DE, SIEGFRIED EBEL: "Auswertung automatisierter potentiometrischer Titrationen", Seiten 811-817  * Ganz *  ---- | 1 | |

| RECHERCHIERTE SACHGEBIETE (Int. Cl. 3) |
|---|
| G 01 N 31/16 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-04-1980 | TREVETIN |

EPA form 1503.1   06.78